# EUROPEAN PATENT SPECIFICATION

(11) **EP 1 281 621 B1**
(45) Date of publication and mention of the grant of the patent: **12.10.2005**
(21) Application number: 02253982.9
(22) Date of filing: 07.06.2002
(51) Int. Cl.: B65B 57/00, B29C 65/02, G07C 3/00

(54) **Method and apparatus for monitoring the sealing conditions in a packaging apparatus**
Verfahren und Vorrichtung zum Überwachen der Siegelbedingungen in einer Verpackungsmaschine
Procédé et système de surveillance de l'état de scellement dans une machine d'emballage

(30) Priority: 08.06.2001 GB 0114018
(43) Date of publication of application: 05.02.2003
(73) Proprietor: UNITED BISCUITS (UK) LIMITED, Middlesex UB7 7PR (GB)
(72) Inventor: Kelly, Barry Peter, Buckinghamshire SL7 1TX (GB)
(74) Representative: Humphreys, Ceris Anne

(56) References cited:
- EP-A- 0 406 751
- EP-A- 0 536 447
- DE-A- 3 539 181
- US-A- 4 340 610
- US-A- 4 468 135
- US-A- 5 415 050
- PATENT ABSTRACTS OF JAPAN vol. 2000, no. 04, 31 August 2000 (2000-08-31) -& JP 2000 009544 A (YOSHINO KOGYOSHO CO LTD), 14 January 2000 (2000-01-14)
- PATENT ABSTRACTS OF JAPAN vol. 007, no. 278 (P-242), 10 December 1983 (1983-12-10) -& JP 58 154634 A (SUNTORY KK), 14 September 1983 (1983-09-14)
- PATENT ABSTRACTS OF JAPAN vol. 013, no. 412 (P-932), 12 September 1989 (1989-09-12) -& JP 01 150829 A (MURATA MFG CO LTD), 13 June 1989 (1989-06-13)

## Description

The invention relates to packaging, and especially to a method and apparatus for monitoring sealing conditions in packaging apparatus in which an item or items are wrapped in a packaging film and portions of the film are caused to adhere together to form a package. The packaging apparatus may be of the kind that utilises so-called "heat-sealing" technology, in which a heat-sealable packaging film is used, and seals are formed by heating and pressing together portions of the film.

Alternatively, the packaging apparatus may utilise so-called "cold-sealing" in which the packaging film has an area or areas that are adhesive at ambient temperature, generally by means of the application of an adhesive composition to the packaging film, so that packages can be formed by pressing portions of the packaging film together to form seals without the application of heat.

With packaging apparatus operating either a cold-seal system or a heat-seal system, setting up the apparatus for running at optimum sealing efficiency in any given set of circumstances has previously relied to a large extent on the expertise and experience of the operator, and to some extent on trial and error. In particular, in the case of packaging apparatus operating with a cold-seal system, different packaging films and/or different adhesive compositions may well require different sealing conditions of sealing force and sealing period (the period during which a seal is being effected). In a heat-sealing system, different heat-sealable packaging films may require different conditions of sealing force, sealing temperature and sealing period for satisfactory seals to be achieved.

DE 3 539 181 Al discloses measuring sealing force used to heat-seal foil closures to plastics containers, for example, beakers filled with dairy products. A measurement container is used which is of similar shape to the container being sealed and contains a movable spring plunger. The spring plunger acts, under the sealing force, against a spring to provide a readable measurement of the maximum force exerted during sealing on a display device on the measurement container.

The invention provides a method of monitoring sealing conditions in packaging apparatus which wraps an item or a plurality of items in a packaging film, and has a sealing device which presses at least one portion of the film against another portion of the film for a sealing period to cause the said portions to adhere together to form a seal, the method comprising monitoring the force exerted by the said sealing device during a sealing period using a monitoring device in place of the said item or plurality of items, the monitoring device producing an output dependent on the said force exerted by the sealing device.

The invention also provides apparatus for monitoring sealing conditions in packaging apparatus arranged to wrap an item or a plurality of items in a packaging film, the packaging apparatus comprising a sealing device for pressing at least one portion of the film against another portion of the film for a sealing period to cause the said portions to adhere together to form a seal, the monitoring apparatus comprising a monitoring device of an external configuration such that it can be used in place of the said item or items, the monitoring device comprising a sensor for monitoring the force exerted by the said sealing device.

The apparatus and method of the invention can be used to monitor sealing conditions in packaging apparatus utilising cold-sealing technology, in which at least one of the portions of the film pressed by the sealing device is adhesive at ambient temperatures so that the portions pressed by the sealing device are caused to adhere together and form the seal. The apparatus and method of the invention can also be used to monitor sealing conditions in packaging apparatus in which the packaging film is a heat-sealable packaging film and the sealing device heats one or more portions of the film that it presses together. In that case, the monitoring device advantageously also comprises a sensor for monitoring the temperature of the sealing device, the monitoring device producing an output dependent on the temperature of the sealing device, in operation.

In the method of the invention, the monitoring device can be sent through the packaging apparatus in place of an item or plurality of items to be packaged. The monitoring may be carried out whilst the packaging apparatus is operating and preferably under normal operating conditions, for example, speed. The packaging apparatus may wrap the monitoring device in packaging film while monitoring is taking place. Alternatively, it may be found convenient to operate the packaging apparatus without using the packaging film. In either case, the sensor or sensors of the monitoring device are arranged to respond to the sealing device during its sealing period, being so located on or in the monitoring device that when the monitoring device is sent through the packaging apparatus the sealing device acts on the sensor or sensors, and outputs dependent on the force exerted by the sealing device and (in the case of heat-sealing apparatus) the temperature of the sealing device are produced.

Such a monitoring operation can be carried out to determine optimum values of sealing force and sealing period in cold-seal packaging apparatus, and sealing force, sealing temperature and sealing period in heat-seal packaging apparatus, in any given set of operating parameters, so that re-setting of the packaging apparatus for those operating parameters can be greatly facilitated, down time and waste can be reduced, and an overall saving in manufacturing costs achieved.

Although the apparatus and method of the invention can be used with a variety of different kinds of packaging apparatus, they are especially useful in monitoring sealing conditions in packaging apparatus, which is often referred to as "roll-wrap" packaging apparatus. Such packaging apparatus is used to package an item, or a plurality of items, for example, an assembly of biscuits arranged substantially co-axially. Each item or plurality of items to be packaged is wrapped in a length of packaging film, edge portions of which are brought together around the item or plurality of items and sealed by a sealing device that makes a longitudinally-extending seal. The longitudinal seal may be a so-called "fin" seal in which an edge portion of one surface of the packaging film is sealed to another edge portion of the same surface of the film, or it may be a so-called "lap" seal in which a portion of one surface of the packaging film is sealed to a portion of the other surface of the packaging film. In packaging apparatus in which the longitudinal seal is formed as a fin seal, that seal may then be folded over against the surface of the tube of packaging film and sealed thereto by another sealing device. After the formation of the longitudinal seal, the open end portions of the tube are folded and the folded portions are pressed against end surfaces of the item or items being packaged by further sealing devices that operate to form end seals at each end of the package, usually at the same time.

The sealing device to which the said sensor or sensors of the monitoring device of the invention are responsive may be a device that operates to form a fin seal or a lap seal. It may be one that operates in the formation of one or both end seals of a package in a roll-wrap packaging apparatus, or one that is arranged to seal a fin seal to the remainder of the package by heating and pressing, or pressing, it against the package.

In packaging apparatus having sealing devices for making more than one of those seals, then the monitoring device is advantageously provided with one or more further sensors for monitoring the or each additional sealing device.

The monitoring device advantageously has a body of substantially the same external configuration as the item or plurality of the items to be packaged. When it is to be used to monitor the making of, for example, a fin seal, in which portions of the packaging film are pressed together by the sealing device without being pressed onto the item or items being packaged in normal operation, then the monitoring device is advantageously provided with one or more sensors projecting from the body and so arranged as to be pressed between the said portions of the packaging film in operation. Preferably, such sensors are flexible, or mounted to be flexible, for example in a flexible material, relative to the body. When the monitoring device is used to monitor the making of, for example, end seals in roll-wrap packaging apparatus, then the or each sensor for the sealing devices is preferably mounted on or within the said body.

Advantageously, the monitoring device is arranged to produce an output dependent on the said force exerted by the or each sealing device and/or an output dependent on the temperature of the or each sealing device (in the case of a heat-sealing system) at intervals during the sealing period of the or each sealing device. The sealing period of each sealing device, which period is sometimes referred to as its "dwell time" or its "residence time", may be within the range of from 0.3 to 1 second. The monitoring device advantageously comprises a logger for logging the said output or outputs during the or each sealing period. With that arrangement, data from the logger can be downloaded when the monitoring device leaves, or is removed from, the packaging apparatus. In that manner, profiles of the force exerted by the or each sealing device throughout the sealing period, and of the temperature of the or each sealing device (in a heat-sealing system) can be obtained. If such profiles are obtained when the packaging apparatus is running satisfactorily in a given set of operating parameters, for example, using a particular packaging film, then when it is wished to re-use those parameters the monitoring operation can be repeated on setting up the apparatus and the apparatus adjusted to give the same or similar profiles. The arrangement may be such that the outputs dependent on the said sealing force and/or temperature are logged at a rate of up to 1000 times per second. It has been found, however, that an arrangement in which the outputs dependent on the said sealing force and/or temperature are logged at a rate within the range of from 2 to 50 times per second can give a sufficiently informative profile depending on the length of the sealing period.

The sensor of the temperature (when provided)of the or each sealing device may be any form of temperature sensor but advantageously comprises one or more thermocouples, preferably, quick-response thermocouples, or infra-red sensors. The said sensor is preferably arranged to measure temperatures within the range of from 10°C to 200°C. The sensor of the sealing force exerted by the or each sealing device advantageously comprises one or more force transducers, but may comprise one or more strain gauges, one or more spring balances with potentiometers, or any other form of force detector. The sealing force sensor is preferably arranged to measure forces within the range of from 0.2kg to 1500kg.

When the apparatus and method of the invention are to be used for monitoring sealing conditions in roll-wrap packaging apparatus utilising heat-sealing technology, the monitoring device advantageously has a substantially cylindrical body (although the body may be provided with a longitudinally-extending flat surface to aid in correct orientation of the monitoring device in operation) with two end surfaces. For monitoring the or each sealing device for the end seals, each of the end surfaces of the body is advantageously provided with one or more temperature sensors, and a force sensor is preferably located between the said end surfaces, which are movable relative to each other in an axial direction in response to force exerted by the sealing device. If the longitudinal seal is also to be monitored, then the body is also advantageously provided with one or more projecting sensors for monitoring the force and temperature of the sealing device making the longitudinal seal.

In addition, the monitoring device may be provided with a detector for measuring changes in forces acting upon the monitoring device as it travels through the packaging apparatus.

The method and apparatus of the invention are especially advantageous when the item or plurality of items to be packaged is a food product, for example, biscuits or a snack food product. The expression "item or plurality of items" is used in this specification to include any substance that can be packaged by the packaging apparatus.

Several forms of a method and apparatus for monitoring sealing conditions in packaging apparatus in accordance with the invention will now be described, by way of example, with reference to the drawings, in which:
Fig. 1 is a diagram of roll-wrap packaging apparatus;
Fig. 2 is a diagram of a package produced by roll-wrap packaging apparatus;
Fig. 3 shows one form of a monitoring device in accordance with the invention, with part of its cover removed, suitable for use in the apparatus of Fig. 1;
Figs. 4 and 5 show other configurations of the monitoring device of Fig. 3;
Fig. 6 is a graph of temperature and sealing force against time;
Fig. 7 is a side view of another form of a monitoring device in accordance with the invention suitable for use in the apparatus of Fig. 1, and
Fig.8 is a cross-section through the device of Fig. 7.

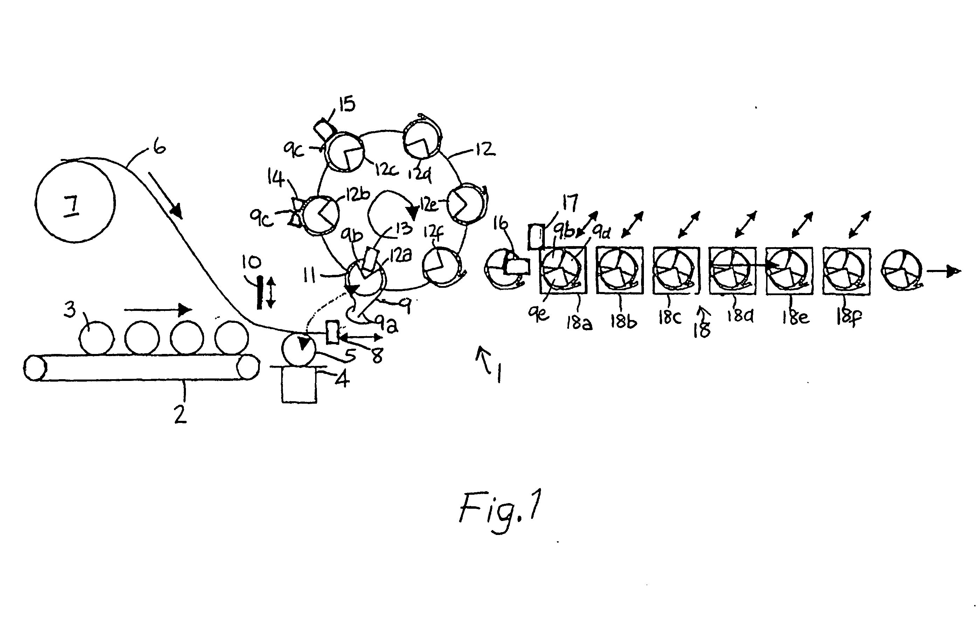

Referring to the accompanying drawings, and initially to Fig. 1, one configuration of roll-wrap packaging apparatus, indicated generally by the reference numeral 1, comprises an endless conveyor 2 arranged to transport a succession of disc-shaped articles 3, for example, biscuits, and deliver them one at a time into a pocket wheel feeder 4 where a predetermined number of the biscuits are assembled substantially co-axially into an assembly 5. Heat-sealable packaging material or film 6 drawn from a supply reel 7 by reciprocating grippers 8 is pulled over the top of the assembly of biscuits 5 and an appropriate length 9 of the film 6 is cut by a reciprocating knife 10. At the same time, the pocket wheel feeder 4 pushes the assembly 5 upwards into an empty compartment 11 in a first position 12a of a pocket wheel 12 in such a manner that the assembly takes with it the cut length 9 of film 6 which, by this action, is wrapped around the assembly with cut edge portions 9a of the film length extending parallel to the axis of the assembly and with portions of the film length extending beyond the assembly at each of its ends. A first fold 9b over bars (not shown) in each of the said portions of the film length 9 extending beyond the ends of the assembly 5 is also made in the first position 12a of the pocket wheel 12 by folders 13. The folders 13 tuck the folds in against the end surfaces of the assembly 5.

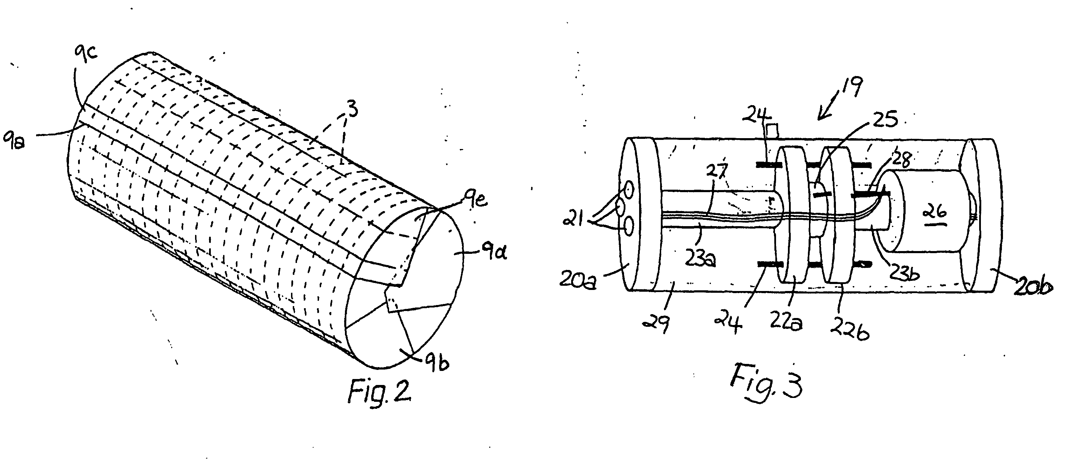

The pocket wheel 12 then rotates until the compartment 11 is in a second position 12b where the cut edge portions 9a of the film length 9 are heated and pressed together to form a longitudinally-extending fin seal 9c by means of sealing jaws 14. In a third position 12c, the fin seal 9c is folded down onto the film-wrapped assembly 5 and a fold seal block 15 heats the fin seal and presses it against the film 9 on the assembly to cause it to adhere to the film. The pocket wheel 12 then rotates the compartment 11 through three more positions 12d, 12e and 12f before the assembly 5 exits the pocket wheel. On exiting, two further pairs of end folders 16 and 17, respectively, each makes a further fold 9d and 9e, respectively, in each of the end portions of the film 9, and tucks those folds in against the end surfaces of the assembly 5. The wrapped assembly 5 then passes through a heat-sealing device 18 comprising a bank of six pairs of end sealers 18a to 18f, respectively. In each of the end sealers 18 a pair of reciprocating jaws (not shown) heats and presses the end folds 9b, 9d and 9e onto the end surfaces of the assembly 5 for a sealing period so that the folds of the film 9 are sealed to each other to form a package, an example of which is shown in Fig. 2 and carries the same reference numerals as used in Fig. 1 for similar features.

In accordance with one form of the present invention, in order to monitor sealing conditions of temperature and sealing force in the packaging apparatus 1, and in this case in each of the end sealers 18a to 18f over their respective sealing periods, a monitoring device, indicated generally by the reference numeral 19 and shown in Fig. 3, of a similar external configuration to the assembly 5 of biscuits, is used.

The monitoring device 19 comprises a pair of disc-like end members 20a and 20b, respectively, of equal diameter, each being provided with, in this case, three quick-response thermocouples 21 (although more or less thermocouples may be provided) on their outwardly facing surfaces. Each end member 20a, 20b is secured to an inner disc-like member 22a and 22b, respectively, of smaller diameter by a central connecting rod 23a and 23b, respectively. Each of the central rods 23a and 23b is provided with a threaded bar/bolt assembly (not shown) which allows for adjustment (+/-10mm) in the length of the rods. The inner members 22a, 22b, and hence the outer members 20a, 20b to which they are connected by the central rods 23a, 23b, respectively, are free to move relative to each other in a longitudinal direction (along the axes of the rods) on stabilising bars 24, which prevent relative radial or transverse movement between the inner members. A force transducer 25 (for example, an Omega LCFA load cell) is located between the two inner members 22a and 22b and is arranged to give an output responsive to the force exerted upon it by the inner members. A data logger 26 is mounted on the central rod 23b and is arranged to log outputs from the thermocouples 21 and the force transducer 25 via cables 27 and 28, respectively, at a rate of 32 readings per second. The data logger 26 may also provide power for the force transducer 25, or a separate battery (not shown) for the force transducer may be provided.

A cylindrical cover 29, only a part of which is shown in Fig. 3, is also provided to give the monitoring device the same configuration as the assembly 5 of biscuits. The disc-like members 20a, 20b and 22a, 22b, the connecting rods 23a, 23b and the cover 29 may be made from plastics material, for example, Peak, and incorporate a crumple zone to minimise damage to the packaging apparatus in the event of a malfunction.

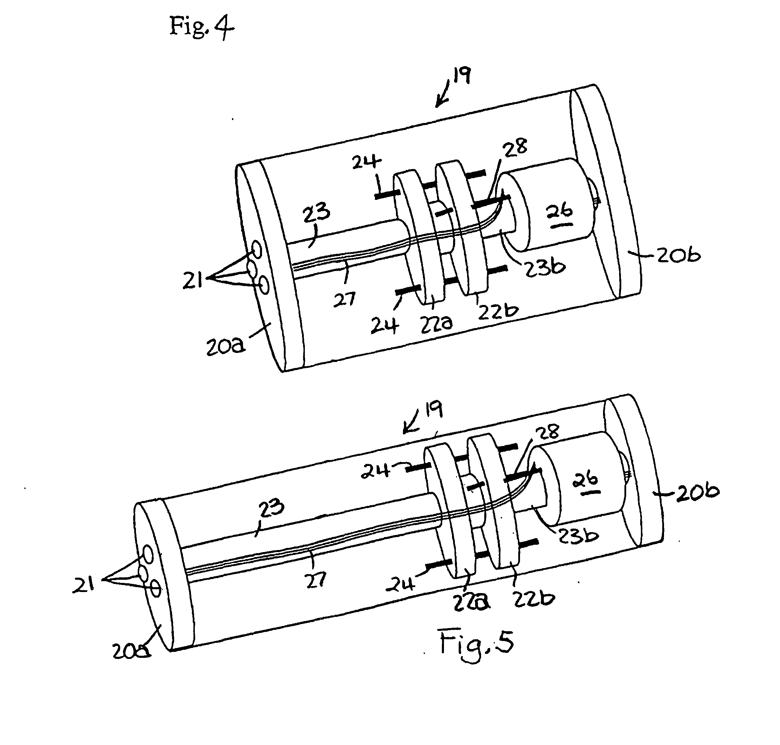

Although the central rods 23a and 23b can be adjusted in length to a small extent, the configuration of the monitoring device can be selected to suit the packaging apparatus being monitored. Figs. 4 and 5 show similar monitoring devices to the monitoring device 19 with the same reference numerals being used for similar features, but the device of Fig. 4 is of larger diameter and the device of Fig. 5 is of greater length.

The monitoring device 19 may also be provided with an accelerometer (not shown) to measure changes in forces acting upon the device as it travels through the packaging apparatus.

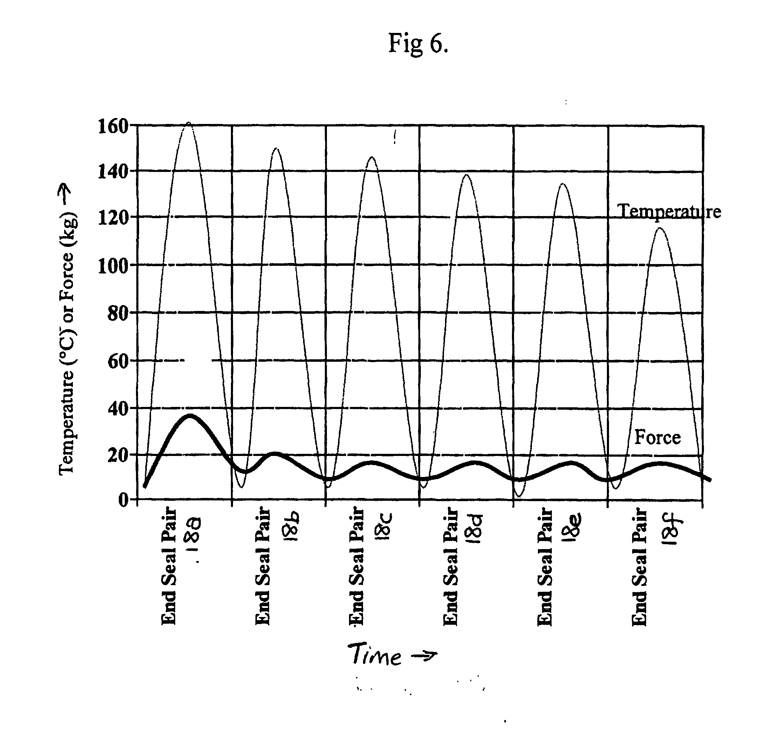

In operation, the monitoring device 19 is placed on the continuous conveyor 2 of the packaging apparatus 1 instead of the biscuits 3 and is sent through the packaging apparatus, which may be arranged to operate with or without the packaging film 6. The thermocouples 21 produce an output dependent on the temperature of contacting surfaces of the jaws of each of the end sealers 18a to 18f while they are in contact with the monitoring device 19. The thermocouples 21 can measure temperatures within the range of from 10°C to 200°C but the temperature of the contacting surfaces typically lies within the range of from 80°C to 160°C. The force transducer 25 produces an output dependent on the force exerted on the end members 20a, 20b and hence the inner members 22a, 22b by each set of the jaws of the end sealers 18a to 18f over the same period of contact. The force transducer 25 can measure forces within the range of from 0.2kg to 500kg, but the force typically lies within the range of from 10kg to 20kg. The data logger 26 logs the outputs at a rate of 32 readings per second. On exiting the packaging apparatus 1, the data from the logger 26 is down-loaded onto a computer and profiles obtained of temperature and force against time for each of the end sealers 18a to 18f as shown in Fig. 6. In Fig. 6, the temperature profile is shown in a dotted line and the sealing force profile is shown in a solid line. Such profiles can be used for re-setting the packaging apparatus.

Although not shown in Figs. 3 to 5, the monitoring device 19 may also be provided with sensors for the temperature and sealing force of the fold seal block 15.

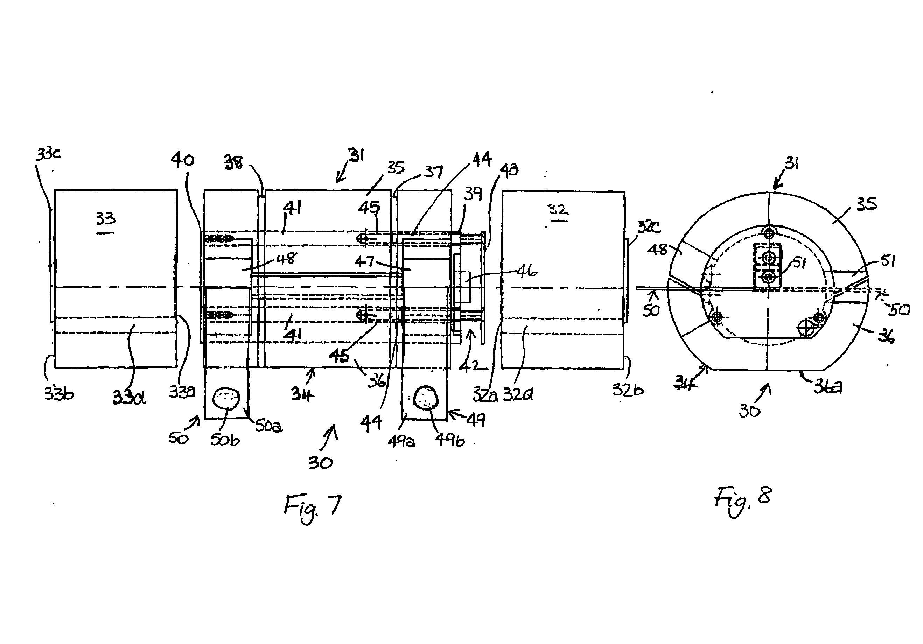

When it is desired to monitor the temperature and sealing force of the sealing jaws 14 of Fig. 1 in addition to monitoring the sealing conditions of the end sealers 18a to 18f, a monitoring device, indicated generally by the reference numeral 30, as shown in Figs. 7 and 8 can be used in place of the monitoring device 19 of Fig. 3.

The monitoring device 30 comprises a body, indicated generally by the reference numeral 31, moulded from polyurethane and comprising two substantially cylindrical end sections 32 and 33, respectively, and a main casing 34 having upper and lower members 35 and 36, respectively.

Each of the end sections 32, 33 is provided with a magnetic fastener(not shown) on its inner end surface 32a, 33a, respectively, for attachment of the end section to the main casing 34. On its other end surface 32b, 33b, respectively, facing away from the main casing 34, each end section 32, 33 has a temperature sensor plate 32c and 33c, respectively, each plate incorporating a thermocouple (not shown). Each of the end sections 32, 33 is also formed with a conduit 32d and 33d, respectively, through which pass electrical connections (not shown) from the thermocouples.

The upper and lower members 35 and 36 of the main casing 34, which together form a substantially cylindrical hollow central section, are removable from each other and replaceable, being held together by elastic O-rings(not shown) located in grooves 37 and 38, respectively. The lower member 36 has a flat longitudinally-extending surface 36a on its base (as do the end sections 32 and 33) to prevent the monitoring device 30 from rolling, in operation. Two metal end plates 39 and 40, respectively, and four tie rods 41 extending between the end plates are provided to give the required strength to the casing 34. The end section 33 attaches magnetically to the end plate 40.

The end plate 39 forms a support plate for a load cell, indicated generally by the reference numeral 42, mounted on the casing 34. The load cell 42 also comprises a movable metal bearing plate 43 mounted on legs 44 which extend in an axial direction in drillings 45 in the casing 34 along which they are slidably movable. A point sensor 46 is mounted in the centre of the support plate 39. The end section 32 attaches magnetically to the bearing plate 43, movement of the end section in an axial direction towards the casing 34 causing the bearing plate 43 to move towards, contact and then bear on the point sensor 46, which is arranged to deliver an output dependent on the force exerted by the bearing plate 43 upon it.

The upper and lower members 35 and 36 of the casing 34 define between them two circumferentially-extending apertures 47 and 48, respectively, in the casing, one aperture being located adjacent each end of the casing. Through each of the apertures 47, 48 projects a flexible sensor indicated generally by the reference numerals 49 and 50, respectively. Each flexible sensor 49, 50 comprises a flexible strip 49a and 50a, respectively, of polyester which extends from a sensor mounting block 51 located within the casing 34 to the exterior, and a composite sensor pad 49b and 50b, respectively, mounted towards the free end of each flexible strip. Each of the pads 49b, 50b comprises a pressure sensor, the electrical resistance of which changes when a force is exerted on it. Because the response of the pressure sensor may vary with temperature, a temperature sensor is bonded alongside the pressure sensor to allow for compensation if necessary. The pressure sensor and its accompanying temperature sensor are encased in a thin film of insulation material. The pads 49b, 50b also each comprises a further temperature sensor located above the film of insulation material to monitor external temperature, and the whole pad is encased in a layer of PTFE to prevent sticking of the packaging film to the pad, in operation. Electrical connections (not shown) for the sensor pads 49b, 50b pass through the flexible strips 49a and 50a, respectively for connection at the mounting blocks 51 within the casing 34. Each of the flexible sensors 49, 50 is less than 0.5mm in thickness. The sensor mounting blocks 51 allow some freedom of movement to the flexible sensors 49, 50, which can be pulled further out of the apertures 47, 48 and retracted to a certain extent if required. The width of the apertures 47, 48 also allows for adjustment of the position of the flexible sensors 49,50 to cater for any particular packaging apparatus. Instead of projecting out of the apertures 47 and 48, the flexible sensors 49 and 50 may be arranged to extend in the opposite direction (as shown in dotted lines in Fig. 8) out of apertures 51 (also shown in dotted lines in Fig. 8) in the casing 34.

Within the casing 34 is situated a logger (not shown) for logging outputs from the temperature sensors 32a, 33a, the load cell 42, and the flexible sensors 49, 50. A power supply in the form of batteries (not shown) is also located inside the casing 34.

The monitoring device 30 is provided with a buzzer (not shown) in order to locate it after packaging.

In operation, the monitoring device 30 is placed on the continuous conveyor 2 on its flat surface 36a so that it is in the correct orientation for monitoring sealing conditions of the jaws 14, the flat surface preventing rolling of the device as it is carried along the continuous conveyor. The monitoring device 30 is sent through the packaging apparatus 1, which may be operated with or without packaging film. When it reaches the second position 12b, the jaws 14 grip the composite pads 49b and 50b of the flexible sensors 49 and 50, respectively, between portions of the film (if provided) and outputs dependent on the temperature of the jaws and the force exerted by the jaws are sent by the flexible sensors 49 and 50 to the logger which logs outputs at the rate of 32 readings per second during the sealing period (the period during which the jaws 14 are in contact with the flexible sensors). The monitoring device 30 moves on through the other stages of the packaging apparatus 1 until it reaches the end sealers 18a to 18f, where a further monitoring operation is carried out in a similar manner to that of the monitoring device 19, the temperature of the end sealers being monitored by the temperature sensors 32c and 33c, and the force exerted by the end sealers being monitored by the load cell 42. Outputs from those sensors 32c, 33c and 42 are passed to the logger, which again logs the outputs at the rate of 32 readings per second. On exiting the packaging apparatus 1, the data from the logger is down-loaded onto a computer and profiles obtained of temperature and force against time for each of the sealers 14 and 18a to 18f in a similar manner as with the monitoring device 19. Such profiles can be used for re-setting the packaging apparatus.

In order to cater for assemblies of biscuits of different lengths, the end sections 32 and 33 can be replaced by longer or shorter sections. For different diameter assemblies, the whole body 31 can be replaced by a further similar body of suitable external diameter.

## Claims

1. A method of monitoring sealing conditions in packaging apparatus (1) which wraps an item or a plurality of items (5) in a packaging film (6), and has a sealing device (14, 15, 18) which presses at least one portion (9a, 9b, 9d, 9e) of the film against another portion of the film for a sealing period to cause the said portions to adhere together to form a seal, the method comprising monitoring the force exerted by the said sealing device during a sealing period using a monitoring device (19, 30) in place of the said item or plurality of items, the monitoring device producing an output dependent on the said force exerted by the sealing device.

2. A method as claimed in claim 1, wherein at least one of the portions of the film pressed by the sealing device is adhesive at ambient temperatures so that the portions are caused to adhere together and form the seal.

3. A method as claimed in claim 1, wherein the packaging film (6) is a heat-sealable packaging film and the sealing device (14, 15, 18) heats one or more portions (9a, 9b, 9d, 9e) of the film that it presses together.

4. A method as claimed in claim 3, which also comprises monitoring the temperature of the sealing device (14, 15, 18) during a sealing period, the monitoring device (19, 30) producing an output dependent on the temperature of the sealing device.

5. A method as claimed in any one of claims 1 to 4, in which the packaging apparatus (1) wraps each item or plurality of items (5) in a length of packaging film (6), edge portions (9a) of which are brought together around the item or plurality of items and sealed with a longitudinally-extending seal (9c) to form an open-ended tube, the open end portions (9b, 9d, 9e) of the tube being pressed against end surfaces of the item or items being packaged by further sealing devices (18) that operate to form end seals at each end of the package.

6. A method as claimed in any one of claims 1 to 5, wherein the packaging apparatus (1) has sealing devices (14, 15, 18) for making more than one seal and the monitoring device (19, 30) monitors the or each additional sealing device.

7. A method as claimed in claim 6, wherein the monitoring device (19, 30) has a body of substantially the same external configuration as the item or plurality of items (5) to be packaged.

8. A method as claimed in claim 7, wherein the sealing device (14) is arranged to form the seal by pressing portions (9a) of the packaging film (6) together without pressing them onto the item or items (5) being packaged, and the monitoring device (30) is provided with one or more sensors (49, 50) projecting from the body (31) and so arranged as to be pressed between the said portions of the packaging film.

9. A method as claimed in any one of claims 1 to 8, wherein the monitoring device (19, 30) gives a measure of the force exerted by the sealing device (14, 15, 18) at intervals during the sealing period and, when also producing an output dependent on the temperature of the sealing device, gives a measure of the temperature of the sealing device at intervals during the sealing period.

10. A method as claimed in claim 9, wherein the or each of the said outputs dependent on the said temperature and force are logged during the or each sealing period

11. A method as claimed in claim 10, wherein the or each of the said outputs are logged at a rate of up to 1000 times per second.

12. A method as claimed in claim 11, wherein the or each of the outputs dependent on the said temperature and force are logged at a rate within the range of from 2 to 50 times per second.

13. A method as claimed in any one of claims 1 to 12, wherein the item or plurality of items (5) is a food product.

14. A method as claimed in any one of claims 1 to 13, in which the packaging apparatus (1) is operated under normal operating conditions during monitoring.

15. Apparatus for monitoring sealing conditions in packaging apparatus (1) arranged to wrap an item or a plurality of items (5) in a packaging film (6), the packaging apparatus comprising a sealing device (14, 15, 18) for pressing at least one portion (9a, 9b, 9d, 9e) of the film against another portion of the film for a sealing period to cause the said portions to adhere together to form a seal, the monitoring apparatus comprising a monitoring device (19, 30) of an external configuration such that it can be used in place of the said item or items, the monitoring device comprising a sensor (25, 42, 49, 50) for monitoring the force exerted by the said sealing device.

16. Apparatus as claimed in claim 15, wherein at least one of the portions of the film that is pressed by the sealing device, in operation, is adhesive at ambient temperatures so that the portions are caused to adhere together and form the seal.

17. Apparatus as claimed in claim 15, wherein the packaging film (6) is a heat-sealable packaging film and the sealing device (14, 15, 18) is arranged to heat one or more portions (9a, 9b, 9d, 9e) of the film that it presses, in operation.

18. Apparatus as claimed in claim 17, wherein the monitoring device (19, 30) also comprises a sensor (21, 32c, 33c, 49, 50) for monitoring the temperature of the sealing device.

19. Apparatus as claimed in any one of claims 15 to 18, wherein the packaging apparatus (1) is arranged to wrap each item or plurality of items (5) in a length of packaging film (6) by bringing edge portions of the film (9a) together around the item or plurality of items and the sealing device (14) seals them with a longitudinally-extending seal (9c) to form an open-ended tube, the packaging apparatus being arranged to press the open end portions (9b, 9d, 9e) of the tube against end surfaces of the item or items being packaged and being provided with further sealing devices (18) that operate to form end seals at each end of the package.

20. Apparatus as claimed in any one of claims 15 to 19, wherein the packaging apparatus has sealing devices (14, 15, 18) for making more than one seal and the monitoring device (19, 30) is arranged to monitor the or each additional sealing device.

21. Apparatus as claimed in any one of claims 15 to 20, wherein the monitoring device (19, 30) has a body of substantially the same external configuration as the item or plurality of the items (5) to be packaged.

22. Apparatus as claimed in claim 21, wherein the sealing device (14) is arranged to form the seal by pressing portions (9a) of the packaging film (6) together without pressing them onto the item or items (5) being packaged, and the monitoring device (30) is provided with one or more sensors (49, 50) projecting from the body (31) and so arranged as to be pressed between the portions of the packaging film, in operation.

23. Apparatus as claimed in claim 22, wherein the projecting sensors (49, 50) are flexible, or mounted to be flexible, relative to the body (31).

24. Apparatus as claimed in any one of claims 15 to 23, wherein the monitoring device (19, 30) includes a logger (26) for logging outputs from the or each sensor (21, 25, 32c, 33c, 42, 49, 50) at predetermined intervals during the or each sealing period.

25. Apparatus as claimed in claim 24, wherein the arrangement is such that the outputs are logged at a rate of up to 1000 times per second.

26. Apparatus as claimed in claims 25, wherein the outputs are logged at a rate within the range of from 2 to 50 times per second.

27. Packaging apparatus comprising apparatus for monitoring sealing conditions as claimed in any one of claims 15 to 26.

## Patentansprüche

1. Verfahren zum Überwachen der Abdichtungsbedingungen in einer Verpackungsvorrichtung (1), die einen oder mehrere Gegenstände (5) in eine Verpackungsfolie (6) einwickelt und eine Abdichtungsvorrichtung (14, 15, 18) besitzt, die während einer Abdichtungsperiode wenigstens einen Abschnitt (9a, 9b, 9d, 9e) der Folie gegen einen weiteren Abschnitt der Folie presst, um ein Anhaften der Abschnitte aneinander zu bewirken, um eine Abdichtung zu bilden, wobei das Verfahren das Überwachen der durch die Abdichtungsvorrichtung während der Abdichtungsperiode ausgeübten Kraft unter Verwendung einer Überwachungsvorrichtung (19, 30) statt des einen oder der mehreren Gegenstände umfasst, wobei die Überwachungsvorrichtung ein Ausgangssignal erzeugt, das von der durch die Abdichtungsvorrichtung ausgeübten Kraft abhängt.

2. Verfahren nach Anspruch 1, bei dem wenigstens einer der Abschnitte der Folie, der durch die Abdichtungsvorrichtung gepresst wird, bei Umgebungstemperaturen klebt, so dass ein Haften der Abschnitte aneinander bewirkt wird, und sie die Abdichtung bilden.

3. Verfahren nach Anspruch 1, bei dem die Verpackungsfolie (6) eine wärmeverschweißbare Verpackungsfolie ist und die Abdichtungsvorrichtung (14, 15, 18) einen oder mehrere Abschnitte (9a, 9b, 9d, 9e) der Folie, die sie zusammenpresst, erhitzt.

4. Verfahren nach Anspruch 3, das außerdem das Überwachen der Temperatur der Abdichtungsvorrichtung (14, 15, 18) während einer Abdichtungsperiode umfasst, wobei die Überwachungsvorrichtung (19, 30) ein Ausgangssignal erzeugt, das von der Temperatur der Abdichtungsvorrichtung abhängt.

5. Verfahren nach einem der Ansprüche 1 bis 4, bei dem die Verpackungsvorrichtung (1) jeden Gegenstand oder jeweils mehrere Gegenstände (5) in einem Teilstück der Verpackungsfolie (6) einwickelt, wobei Kantenabschnitte (9a) hiervon um den Gegenstand oder mehrere Gegenstände zusammengeführt werden und mit einer in Längsrichtung verlaufenden Abdichtung (9c) abgedichtet werden, um einen Schlauch mit offenem Ende zu bilden, wobei die Abschnitte (9b, 9d, 9e) mit offenem Ende des Schlauchs gegen Stirnflächen des Gegenstandes oder der Gegenstände, die verpackt werden, durch weitere Abdichtungsvorrichtungen (18) gepresst werden, die in der Weise arbeiten, dass sie an jedem Ende der Verpackung Stirnabdichtungen bilden.

6. Verfahren nach einem der Ansprüche 1 bis 5, bei dem die Verpackungsvorrichtung (1) Abdichtungsvorrichtungen (14, 15, 18) besitzt, um mehr als eine Abdichtung auszubilden, und die Überwachungsvorrichtung (19, 30) die eine oder jede zusätzliche Abdichtungsvorrichtung überwacht.

7. Verfahren nach Anspruch 6, bei dem die Überwachungsvorrichtung (19, 30) einen Körper mit im Wesentlichen der gleichen äußeren Konfiguration wie der Gegenstand oder die mehreren Gegenstände (5), die verpackt werden sollen, besitzt.

8. Verfahren nach Anspruch 7, bei dem die Abdichtungsvorrichtung (14) so beschaffen ist, dass sie die Abdichtung durch Pressen von Abschnitten (9a) der Verpackungsfolie (6) gegeneinander bildet, ohne die Abschnitte (9a) auf den oder die zu verpackenden Gegenstände (5) zu pressen, und die Überwachungsvorrichtung (30) mit einem oder mehreren Sensoren (49, 50) versehen ist, die vom Körper (31) vorstehen und so beschaffen sind, dass sie zwischen den Abschnitten der Verpackungsfolie gepresst werden.

9. Verfahren nach einem der Ansprüche 1 bis 8, bei dem die Überwachungsvorrichtung (19, 30) ein Maß der durch die Abdichtungsvorrichtung (14, 15, 18) ausgeübten Kraft in Intervallen während der Abdichtungsperiode angibt und, wenn sie auch ein von der Temperatur der Abdichtungsvorrichtung abhängiges Ausgangssignal erzeugt, ein Maß der Temperatur der Abdichtungsvorrichtung in Intervallen während der Abdichtungsperiode angibt.

10. Verfahren nach Anspruch 9, bei dem das oder jedes der Ausgangssignale, die von der Temperatur und von der Kraft abhängen, während der oder jeder Abdichtungsperiode protokolliert werden.

11. Verfahren nach Anspruch 10, bei dem das oder jedes der Ausgangssignale mit einer Rate von bis zu 1000 Mal pro Sekunde protokolliert werden.

12. Verfahren nach Anspruch 11, bei dem das oder jedes der Ausgangssignale, die von der Temperatur und von der Kraft abhängen, mit einer Rate im Bereich von 2 bis 50 Mal pro Sekunde protokolliert werden.

13. Verfahren nach einem der Ansprüche 1 bis 12, bei dem der Gegenstand oder die mehreren Gegenstände (5) ein Lebensmittelprodukt sind.

14. Verfahren nach einem der Ansprüche 1 bis 13, bei der die Verpackungsvorrichtung (1) während der Überwachung unter normalen Betriebsbedingungen betrieben wird.

15. Vorrichtung zum Überwachen von Abdichtungsbedingungen in einer Verpackungsvorrichtung (1), die so beschaffen ist, dass sie einen oder mehrere Gegenstände (5) in eine Verpackungsfolie (6) einwickelt, wobei die Verpackungsvorrichtung eine Abdichtungsvorrichtung (14, 15, 18) zum Pressen wenigstens eines Abschnitts (9a, 9b, 9d, 9e) der Folie gegen einen weiteren Abschnitt der Folie während einer Abdichtungsperiode, um ein Haften der Abschnitte aneinander hervorzurufen und um eine Abdichtung zu bilden, umfasst, wobei die Überwachungsvorrichtung eine Überwachungsvorrichtung (19, 30) mit einer äußeren Konfiguration umfasst, derart, dass sie statt des oder der Gegenstände verwendet werden kann, wobei die Überwachungsvorrichtung einen Sensor (25, 42, 49, 50) umfasst, um die durch die Abdichtungsvorrichtung ausgeübte Kraft zu überwachen.

16. Vorrichtung nach Anspruch 15, bei der wenigstens einer der Abschnitte der Folie, der durch die Abdichtungsvorrichtung gepresst wird, im Betrieb bei Umgebungstemperaturen klebt, so dass ein Haften der Abschnitte aneinander hervorgerufen und die Abdichtung gebildet wird.

17. Vorrichtung nach Anspruch 15, bei der die Verpackungsfolie (6) eine wärmeverschweißbare Verpackungsfolie ist und die Abdichtungsvorrichtung (14, 15, 18) so beschaffen ist, dass sie einen oder mehrere Abschnitte (9a, 9b, 9d, 9e) der Folie, die sie presst, im Betrieb erhitzt.

18. Vorrichtung nach Anspruch 17, bei der die Überwachungsvorrichtung (19, 30) außerdem einen Sensor (21, 32c, 33c, 49, 50) zum Überwachen der Temperatur der Abdichtungsvorrichtung umfasst.

19. Vorrichtung nach einem der Ansprüche 15 bis 18, bei der die Verpackungsvorrichtung (1) so beschaffen ist, dass sie jeden einzelnen Gegenstand oder jeweils mehrere Gegenstände (5) in einem Teilstück der Verpackungsfolie (6) einwickelt, indem Kantenabschnitte der Folie (9a) um den einen oder die mehreren Gegenstände zusammengeführt werden, und die Abdichtungsvorrichtung (14) diese mit einer in Längsrichtung verlaufenden Abdichtung (9c) abdichtet, um einen Schlauch mit offenem Ende zu bilden, wobei die Verpackungsvorrichtung so beschaffen ist, dass sie die Abschnitte (9b, 9d, 9e) mit offenem Ende des Schlauchs gegen Stirnflächen des Gegenstands oder der Gegenstände, die verpackt werden sollen, presst und mit weiteren Abdichtungsvorrichtungen (18) versehen ist, die in der Weise arbeiten, dass sie an jedem Ende der Verpackung Stirnabdichtungen bilden.

20. Vorrichtung nach einem der Ansprüche 15 bis 19, bei der die Verpackungsvorrichtung Abdichtungsvorrichtungen (14, 15, 18) besitzt, um mehr als eine Abdichtung herzustellen, und die Überwachungsvorrichtung (19, 30) so beschaffen ist, dass sie die oder jede zusätzliche Abdichtungsvorrichtung überwacht.

21. Vorrichtung nach einem der Ansprüche 15 bis 20, bei der die Überwachungsvorrichtung (19, 30) einen Körper mit im Wesentlichen der gleichen äußeren Konfiguration wie der eine oder die mehreren Gegenstände (5), die verpackt werden sollen, besitzt.

22. Vorrichtung nach Anspruch 21, bei der die Abdichtungsvorrichtung (14) so beschaffen ist, dass sie die Abdichtung durch Pressen von Abschnitten (9a) der Verpackungsfolie (6) gegeneinander bildet, ohne diese auf den oder die zu verpackenden Gegenstände (5) zu pressen, wobei die Überwachungsvorrichtung (30) mit einem oder mehreren Sensoren (49, 50) versehen ist, die vom Körper (31) vorstehen und so beschaffen sind, dass sie im Betrieb zwischen den Abschnitten der Verpackungsfolie gepresst werden.

23. Vorrichtung nach Anspruch 22, bei der die vorstehenden Sensoren (49, 50) biegsam sind oder so angebracht sind, dass sie in Bezug auf den Körper (31) biegsam sind.

24. Vorrichtung nach einem der Ansprüche 15 bis 23, bei der die Überwachungsvorrichtung (19, 30) eine Protokollierungseinrichtung (26) umfasst, um Ausgangssignale von dem oder jedem Sensor (21, 25, 32c, 33c, 42, 49, 50) in vorgegebenen Intervallen während der oder jeder Abdichtungsperiode zu protokollieren.

25. Vorrichtung nach Anspruch 24, bei der die Anordnung derart ist, dass die Ausgangssignale mit einer Rate von bis zu 1000 Mal pro Sekunde protokolliert werden.

26. Vorrichtung nach Anspruch 25, bei der die Ausgangssignale mit einer Rate im Bereich von 2 bis 50 Mal pro Sekunde protokolliert werden.

27. Verpackungsvorrichtung, die eine Vorrichtung zum Überwachen von Abdichtungsbedingungen nach einem der Ansprüche 15 bis 26 umfasst.

## Revendications

1. Procédé de surveillance de conditions de scellage dans un appareil d'emballage (1) qui enveloppe un article ou une pluralité d'articles (5) dans un film d'emballage (6), et a un dispositif de scellage (14, 15, 18) qui presse au moins une partie (9a, 9b, 9d, 9e) du film contre une autre partie du film pendant une période de scellage pour faire que lesdites parties adhèrent les unes aux autres pour former un scellement, le procédé comprenant la surveillance de la force exercée par ledit dispositif de scellage au cours d'une période de scellage à l'aide d'un dispositif de surveillance (19, 30) à la place dudit article ou de ladite pluralité d'articles, le dispositif de surveillance produisant une sortie dépendant de ladite force exercée par le dispositif de scellage.

2. Procédé selon la revendication 1, dans lequel au moins une des parties du film pressée par le dispositif de scellage est adhésive à des températures ambiantes de sorte que les parties sont forcées d'adhérer les unes aux autres et forment le scellement.

3. Procédé selon la revendication 1, dans lequel le film d'emballage (6) est un film d'emballage thermoscellable et le dispositif de scellage (14, 15, 18) chauffe une ou plusieurs parties (9a, 9b, 9d, 9e) du film qu'il presse les unes contre les autres.

4. Procédé selon la revendication 3, qui comprend également la surveillance de la température du dispositif de scellage (14, 15, 18) au cours d'une période de scellage, le dispositif de surveillance (19, 30) produisant une sortie dépendant de la température du dispositif de scellage.

5. Procédé selon l'une quelconque des revendications 1 à 4, dans lequel l'appareil d'emballage (1) enveloppe chaque article ou la pluralité d'articles (5) dans une longueur de film d'emballage (6), dont des parties de bord (9a) sont réunies autour de l'article ou la pluralité d'articles et scellées avec un scellement s'étendant longitudinalement (9c) pour former un tube à extrémité ouverte, les parties d'extrémité ouverte (9b, 9d, 9e) du tube étant comprimées contre des surfaces d'extrémité de l'article ou des articles en train d'être emballés par des dispositifs de scellage supplémentaires (18) qui fonctionnent pour former des scellements d'extrémité au niveau de chaque extrémité de l'emballage.

6. Procédé selon l'une quelconque des revendications 1 à 5, dans lequel l'appareil d'emballage (1) a des dispositifs de scellage (14, 15, 18) pour réaliser plus d'un scellement et le dispositif de surveillance (19, 30) surveille le ou chaque dispositif de scellage supplémentaire.

7. Procédé selon la revendication 6, dans lequel le dispositif de surveillance (19, 30) a un corps de sensiblement même configuration externe que l'article ou la pluralité d'articles (5) à emballer.

8. Procédé selon la revendication 7, dans lequel le dispositif de scellage (14) est agencé pour former le scellement en comprimant des parties (9a) du film d'emballage (6) les unes contre les autres sans les presser sur l'article ou les articles (5) en train d'être emballés, et le dispositif de surveillance (30) est pourvu d'un ou plusieurs capteurs (49, 50) faisant saillie à partir du corps (31) et agencés pour être pressés entre lesdites parties du film d'emballage.

9. Procédé selon l'une quelconque des revendications 1 à 8, dans lequel le dispositif de surveillance (19, 30) fournit une mesure de la force exercée par le dispositif de scellage (14, 15, 18) à des intervalles au cours de la période de scellage et, lorsqu'il produit également une sortie dépendant de la température du dispositif de scellage, fournit une mesure de la température du dispositif de scellage à des intervalles au cours de la période de scellage.

10. Procédé selon la revendication 9, dans lequel la ou chacune desdites sorties dépendant desdites température et force est enregistrée au cours de la ou chaque période de scellage.

11. Procédé selon la revendication 10, dans lequel la ou chacune desdites sorties est enregistrée à une cadence allant jusqu'à 1000 fois par seconde.

12. Procédé selon la revendication 11, dans lequel la ou chacune des sorties dépendant desdites température et force est enregistrée à une cadence comprise dans la plage allant de 2 à 50 fois par seconde.

13. Procédé selon l'une quelconque des revendications 1 à 12, dans lequel l'article ou la pluralité d'articles (5) sont des produits alimentaires.

14. Procédé selon l'une quelconque des revendications 1 à 13, dans lequel l'appareil d'emballage (1) est actionné dans des conditions de fonctionnement normales au cours de la surveillance.

15. Appareil pour surveiller des conditions de scellage dans un appareil d'emballage (1) agencé pour envelopper un article ou une pluralité d'articles (5) dans un film d'emballage (6), l'appareil d'emballage comprenant un dispositif de scellage (14, 15, 18) pour presser au moins une partie (9a, 9b, 9d, 9e) du film contre une autre partie du film pendant une période de scellage pour faire que lesdites parties adhèrent l'une à l'autre pour former un scellement, l'appareil de surveillance comprenant un dispositif de surveillance (19, 30) d'une configuration externe tel qu'il peut être utilisé à la place dudit article ou desdits articles, le dispositif de surveillance comprenant un capteur (25, 42, 49, 50) pour surveiller la force exercée par ledit dispositif de scellage.

16. Appareil selon la revendication 15, dans lequel au moins une des parties du film qui est comprimée par le dispositif de scellage, durant le fonctionnement, est adhésive à des températures ambiantes de sorte que les parties sont forcées d'adhérer l'une à l'autre et forment le scellement.

17. Appareil selon la revendication 15, dans lequel le film d'emballage (6) est un film d'emballage thermoscellable et le dispositif de scellage (14, 15, 18) est agencé pour chauffer une ou plusieurs parties (9a, 9b, 9d, 9e) du film qu'il presse, durant le fonctionnement.

18. Appareil selon la revendication 17, dans lequel le dispositif de surveillance (19, 30) comprend également un capteur (21, 32c, 33c, 49, 50) pour surveiller la température du dispositif de scellage.

19. Appareil selon l'une quelconque des revendications 15 à 18, dans lequel l'appareil d'emballage (1) est agencé pour envelopper chaque article ou la pluralité d'articles (5) dans une longueur de film d'emballage (6) en réunissant des parties de bord du film (9a) autour de l'article ou de la pluralité d'articles et le dispositif de scellage (14) les scelle avec un scellement s'étendant longitudinalement (9c) pour former un tube à extrémité ouverte, l'appareil d'emballage étant agencé pour comprimer les parties d'extrémité ouverte (9b, 9d, 9e) du tube contre des surfaces d'extrémité de l'article ou des articles en train d'être emballés et étant pourvu de dispositifs de scellage supplémentaires (18) qui fonctionnent pour former des scellements d'extrémité au niveau de chaque extrémité de l'emballage.

20. Appareil selon l'une quelconque des revendications 15 à 19, dans lequel l'appareil d'emballage a des dispositifs de scellage (14, 15, 18) pour réaliser plus d'un scellement et le dispositif de surveillance (19, 30) est agencé pour surveiller le ou chaque dispositif de scellage supplémentaire.

21. Appareil selon l'une quelconque des revendications 15 à 20, dans lequel le dispositif de surveillance (19, 30) a un corps de sensiblement même configuration externe que l'article ou la pluralité des articles (5) à emballer.

22. Appareil selon la revendication 21, dans lequel le dispositif de scellage (14) est agencé pour former le scellement en pressant des parties (9a) du film d'emballage (6) les unes contre les autres sans les presser sur l'article ou les articles (5) en train d'être emballés, et le dispositif de surveillance (30) est pourvu d'un ou plusieurs capteurs (49, 50) faisant saillie à partir du corps (31) et agencés pour être pressés entre les parties du film d'emballage, durant le fonctionnement.

23. Appareil selon la revendication 22, dans lequel les capteurs faisant saillie (49, 50) sont flexibles, ou montés pour être flexibles, par rapport au corps (31).

24. Appareil selon l'une quelconque des revendications 15 à 23, dans lequel le dispositif de surveillance (19, 30) comprend un enregistreur automatique (26) pour enregistrer des sorties provenant du ou de chaque capteur (21, 25, 32c, 33c, 42, 49, 50) à des intervalles prédéterminés au cours de la ou chaque période de scellage.

25. Appareil selon la revendication 24, dans lequel l'agencement est tel que les sorties sont enregistrées à une cadence allant jusqu'à 1000 fois par seconde.

26. Appareil selon la revendication 25, dans lequel les sorties sont enregistrées à une cadence comprise dans la plage allant de 2 à 50 fois par seconde.

27. Appareil d'emballage comprenant un appareil pour surveiller des conditions de scellage selon l'une quelconque des revendications 15 à 26.
